# EUROPÄISCHE PATENTSCHRIFT

(11) **EP 3 458 311 B1**
(45) Veröffentlichungstag und Bekanntmachung des Hinweises auf die Patenterteilung: **18.11.2020**
(21) Anmeldenummer: 17720106.8
(22) Anmeldetag: 27.04.2017
(51) Int. Cl.: B60N 2/00

(54) **ANBAUELEMENT, SYSTEM UND VERFAHREN ZUR HERSTELLUNG EINES ANBAUELEMENTS**
MOUNTING ELEMENT, SYSTEM AND METHOD FOR PRODUCING A MOUNTING ELEMENT
ÉLÉMENT DE MONTAGE, SYSTÈME ET PROCÉDÉ DE FABRICATION D'UN ÉLÉMENT DE MONTAGE

(30) Priorität: 18.05.2016 DE 102016208515
(43) Veröffentlichungstag der Anmeldung: 27.03.2019
(73) Patentinhaber: Bayerische Motoren Werke Aktiengesellschaft, 80809 München (DE)
(72) Erfinder: HUYNH, Dienhung, 84036 Landshut - Auloh (DE); ROTH, Bruno, 84036 Landshut (DE)
(86) Internationale Anmeldenummer: PCT/EP2017/060004
(87) Internationale Veröffentlichungsnummer: WO 2017/198436

(56) Entgegenhaltungen:
- EP-A2- 1 865 208
- DE-A1-102004 059 874
- GB-A- 2 343 430
- US-A1- 2005 081 711

## Beschreibung

Die vorliegende Erfindung betrifft ein Anbauelement zum Anbauen an ein Innenraumbauteil eines Kraftfahrzeugs. Ferner betrifft die Erfindung ein System für einen Innenraum eines Kraftfahrzeugs mit einem erfindungsgemäßen Anbauelement. Schließlich betrifft die Erfindung ein Verfahren zur Herstellung eines erfindungsgemäßen Anbauelements.

Moderne Kraftfahrzeuge weisen einen von Innenraumbauteilen, wie z.B. eine Karosserie, Konsolenblenden, Verkleidungselemente oder dergleichen, umgebenen Innenraum auf, wobei den Innenraum begrenzende sowie diesem zugewandte Oberflächen der Innenraumbauteile zur Verbesserung von Optik, Haptik, Olfaktoriums, Vibrations- bzw. Schalldämpfung und/oder zum Schutz gegen äußere Einflüsse oftmals eine Dekoroberfläche bzw. eine Kaschierung, beispielsweise eine dünne Schicht aus Naturstoff-, Kunststoff-, Leder oder dergleichen aufweisen. Innenraumbauteile können beispielsweise Metalle, Kunststoffe, Naturfaserverbundstoffe oder dergleichen aufweisen.

Ferner sind an derartigen Innenbauteilen oftmals Anbauelemente angeordnet, die beispielsweise technische Funktionen, wie z.B. das Leiten eines Luftstroms einer Klimaanlage in den Innenraum, das Halten eines Getränkebechers, das Abdecken eines Ablagefachs, das Bereitstellen einer Armlehne oder dergleichen, erfüllen. Derartige Anbauelemente weisen oftmals einen relativ starren Grundkörper auf, der über eine Lagerung beweglich, z.B. um mindestens eine Achse verschwenkbar, an ein Innenbauteil anbindbar ist. Derartige Anbauelemente haben den Nachteil, dass diese aufgrund der starren Ausbildung eine geringe Variabilität aufweisen und an veränderte Anforderungen an eine Innenraumgestaltung, z.B. aufgrund eines Fahrerwechsels, veränderten Ansprüchen der Insassen des Kraftfahrzeugs, veränderter Betriebssituation des Kraftfahrzeugs oder dergleichen, kaum anpassbar sind. Ferner weisen viele Anbauelemente, wie z.B. Lüftungsschlitze für einen Auslass eines Innenraumklimasystems, einen komplexen Aufbau auf und sind daher oftmals besonders aufwendig zusammenbaubar. Hierdurch entstehen neben einer hohen Teilezahl ein hoher Montageaufwand sowie hohe Herstellungskosten.

Überdies sind sogenannte intelligente bzw. adaptive Materialsysteme bekannt, die durch ein von außen kontrolliertes Manipulieren, z.B. durch das Anlegen einer elektrischen Spannung oder Verändern eines inneren Luftdrucks, ihre Form verändern können. Durch eine spezielle Ausgestaltung dieser Werkstoffe und ein gezieltes Manipulieren können somit gezielte Formänderungen bewirkt werden. Bekannte Werkstoffe sind beispielsweise dielektrische Elastomere, mit denen Formänderungen von bis zu 300% erzielbar sind. Dielektrische Elastomere gehören zur Gruppe der elektroaktiven Polymere, bei denen eine Formänderung durch Anlegen einer elektrischen Spannung bewirkbar ist. Somit ist mit einem dielektrischen Elastomer elektrische Energie direkt in mechanische Arbeit umwandelbar. Aus den US 2005/081711 A1, EP 1 865 208 A2, GB 2 343 430 A, und DE 10 2004 059874 A1 sind unterschiedliche Bauteile mit einem Grundkörper und einem Aktuator aus einem vom Grundkörper verschiedenen Material bekannt.

Prinzipiell weisen dielektrische Polymere zwei flächige ausgebildete voneinander beabstandete Elektrodenschichten mit einer Zwischenschicht aus einem besonders dehnbaren Elastomer als Dielektrikum auf. Die Elektrodenschichten weisen eine relativ hohe Nachgiebigkeit auf, um Flächendehnungen nicht zu behindern. Durch Anlegen einer elektrischen Spannung an den Elektrodenschichten ziehen sich diese aufgrund der unterschiedlichen Ladungen einander an, wodurch die Zwischenschicht gestaucht wird sowie sich in eine Richtung quer zur Anziehungskraft der Elektrodenschichten ausdehnt. Diese Formveränderung des Elastomers beruht auf einer Inkompressibilität, so dass das Volumen des Elastomers unabhängig vom Druck der Elektrodenschichten konstant bleibt. Beim Abstellen der Spannung geht das Elastomer wieder in seinen Ausgangszustand über. Dielektrische Polymere werden bereits beispielsweise zur Herstellung von Aktoren oder Sensoren verwendet. Derartige Materialsysteme sind derzeit nur sehr aufwendig herstellbar und somit kostenintensiv.

Es ist daher Aufgabe der vorliegenden Erfindung, die voranstehend beschriebenen Nachteile bei einem Anbauelement zum Anbauen an ein Innenraumteil eines Kraftfahrzeugs, einem System für einen Innenraum eines Kraftfahrzeugs sowie einem Verfahren zur Herstellung eines erfindungsgemäßen Anbauelements zu beheben bzw. zumindest teilweise zu beheben. Insbesondere ist es Aufgabe der vorliegenden Erfindung, ein Anbauelement zum Anbauen an ein Innenraumbauteil eines Kraftfahrzeugs, ein System für einen Innenraum eines Kraftfahrzeugs sowie ein Verfahren zur Herstellung eines Anbauelements zu schaffen, die auf eine einfache sowie kostengünstige Art und Weise eine funktionale Innenraumgestaltung eines Kraftfahrzeugs verbessern.

Voranstehende Aufgabe wird durch die Patentansprüche gelöst. Demnach wird die Aufgabe durch ein Anbauelement zum Anbauen an ein Innenraumbauteil eines Kraftfahrzeugs mit den Merkmalen des Anspruchs 1, ein System für einen Innenraum eines Kraftfahrzeugs mit den Merkmalen des Anspruchs 11 sowie durch ein Verfahren zur Herstellung eines derartigen Anbauelements mit den Merkmalen des Anspruchs 13 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Anbauelement beschrieben sind, selbstverständlich auch im Zusammenhang mit dem erfindungsgemäßen System bzw. dem erfindungsgemäßen Verfahren und jeweils umgekehrt, so dass bezüglich der Offenbarung zu den einzelnen Erfindungsaspekten stets wechselseitig Bezug genommen wird beziehungsweise werden kann.

Gemäß dem ersten Aspekt der Erfindung wird die Aufgabe durch ein Anbauelement zum Anbauen an ein Innenraumbauteil eines Kraftfahrzeugs gelöst. Das Anbauelement weist einen Grundkörper aus einem ersten Werkstoff sowie mindestens einen Aktuatorkörper aus einem zweiten Werkstoff auf, wobei der mindestens eine Aktuatorkörper durch Beaufschlagen mit einem Aktuatormittel reversibel verformbar ist. Ferner weist der Grundkörper mindestens einen Aufnahmebereich mit einer Aufnahmebereichsform auf, wobei der mindestens eine Aktuatorkörper in dem mindestens einen Aufnahmebereich angeordnet ist. Durch eine Formveränderung des mindestens einen Aktuatorkörpers ist die Aufnahmebereichsform des mindestens einen Aufnahmebereichs veränderbar. Der erste Werkstoff entspricht dem zweiten Werkstoff.

Ein Innenraumbauteil kann erfindungsgemäß beispielsweise ein Karosseriebauteil, ein Verkleidungselement, wie z.B. eine Karosserieverkleidung, eine Konsolenblende, eine Armaturenblende, ein Lüftungsauslass oder dergleichen sein.

Ein Anbauelement kann erfindungsgemäß beispielsweise ein Verkleidungselement, wie z.B. eine Karosserieverkleidung, eine Konsolenblende, eine Armaturenblende, ein Lüftungsauslass oder dergleichen sein. Anbauelemente sind demnach Gestaltungselemente zum Gestalten des Innenraums und können demnach unterschiedliche technische Funktionen bereitstellen, wie beispielsweise das Abdecken von Bereichen, wie z.B. Karosseriebauteilen oder Fächern, das Leiten bzw. Steuern eines Lüftungsluftstroms, etc. Vorzugsweise ist das Anbauelement flächig bzw. im Wesentlichen flächig ausgebildet. Zusätzlich kann vorgesehen sein, dass das Anbauelement Konturen, wie z.B. Absätze, Schlitze, Kanten, Ecken, Rundungen oder dergleichen aufweist. Das Anbauelement kann beispielsweise in einem entspannten Zustand bereits eine konkrete Form, wie z.B. die einer Armlehne, aufweisen und durch Verformung in eine andere konkrete Form verformbar sein.

Der Grundkörper weist vorzugsweise eine Formeigenstabilität auf, so dass sich dieser ohne äußere Einwirkung nicht oder nur geringfügig verformt bzw. verformen kann und somit eine Grundstabilität des Anbauelements gewährleistet. Dies kann beispielsweise auch im Zusammenspielt mit den weiteren Komponenten des Anbauelements, wie z.B. dem Aktuatorkörper und/oder einer optionalen Ummantelung aus einem flexiblen Material, gewährleistet werden. Eine zumindest geringfügige Flexibilität des Grundkörpers kann von Vorteil sein, um eine Formveränderung des Anbauelements zu ermöglichen. Eine Formveränderung des Grundkörpers kann beispielsweise durch Kupplungselemente, wie z.B. Scharniere, Kugelgelenke oder dergleichen des Grundkörpers erzielbar sein, über die vorzugsweise unflexible Grundkörperelemente des Grundkörpers miteinander verschwenkbar gekoppelt sind. Bevorzugte Materialien für den Grundkörper sind beispielsweise Polypropylen (PP), Acrylnitril-Butadien-Styrol (ABS), Polycarbonat (PC), Polyamid (PA) oder dergleichen.

Der Aktuatorkörper ist ausgebildet, sich in Reaktion auf ein Beaufschlagen mit einem Aktuatormittel bzw. einer Veränderung einer Beaufschlagung mit dem Aktuatormittel reversibel, vorzugsweise flexibel, zu verformen. Unter einer reversiblen Verformung wird eine Verformung verstanden, die zwischen mindestens zwei Verformungszuständen wiederholt erzielbar ist. Dies ist beispielsweise bei einer flexiblen Verformung der Fall. Bevorzugte Materialien für den Aktuatorkörper sind beispielsweise thermoplastische Elastomere (TPE), insbesondere Styrol-Ethylen-Butylen-Styrol (SEBS), thermoplastische Polyurethane (TPU), thermoplastische Polyolefine (TPO) oder dergleichen.

Das Grundbauteil kann beispielsweise als Spritzgussteil und die Aktuatorkörper als 3D-Druckbauteil ausgebildet sein. Es können auch sowohl Grundbauteil als auch Aktuatorkörper als ein 3D-Druckbauteil ausgebildet sein. In diesem Fall weist das 3D-Druckbauteil einen Grundbauteilbereich und Aktuatorkörperbereiche auf.

Der Grundkörper weist mindestens einen Aufnahmebereich mit einer Aufnahmebereichsform auf. Der Aufnahmebereich ist vorzugsweise durch Aufnahmewände in zumindest zwei entgegengesetzte Richtungen begrenzt. Der Aufnahmebereich ist beispielsweise als Kavität ausgebildet, die nach außen vorzugsweise zu einer Seite offen ist.

Der mindestens eine Aktuatorkörper ist in dem mindestens einen Aufnahmebereich angeordnet. Dabei ist es bevorzugt, wenn der Aktuatorkörper den Aufnahmebereich ausfüllt bzw. im Wesentlichen ausfüllt. Besonders bevorzugt liegt der Aktuatorkörper beidseitig an den Aufnahmewänden, die den Aufnahmebereich seitlich in zwei entgegengesetzte Richtungen begrenzen an bzw. ist diesen derart benachbart, dass bereits bei einer relativ geringen Formveränderung des Aktuatorkörpers dieser mit den Aufnahmewänden in Kontakt bringbar ist. Es kann beispielsweise vorgesehen sein, dass der Aktuatorkörper an mehreren Aufnahmewänden anliegt und/oder an mindestens einer Aufnahmewand fixiert ist, z.B. durch Adhäsion.

Durch Beaufschlagen des Aktuatorkörpers ist eine Formveränderung des Aktuatorkörpers erzielbar. Aufgrund dieser Formveränderung ist ein derartiger Druck zwischen Aktuatorkörper und Aufnahmewände erzeugbar, um eine Formveränderung der Aufnahmebereichsform des Aufnahmebereichs zu bewirken. Auf diese Weise ist eine Verformung des Grundkörpers bewirkbar.

Vorzugsweise ist der Grundkörper von einem flexiblen Material zumindest teilweise umfasst, um einen Zusammenhalt von Grundkörper und Aktuatorkörper zu verbessern und/oder das Anbaubauteil vor äußeren Einflüssen zu schützen und/oder zur Verbesserung der Optik, Haptik oder dergleichen.

Das vorliegende Anbauelement hat gegenüber herkömmlichen Anbauelementen den Vorteil, dass mit einfachen Mitteln sowie kostengünstig ein flexibles sowie variables Anbauelement bereitgestellt ist, das zur Ausübung einer Vielzahl unterschiedlicher technischer Funktionen ausgebildet ist. Je nach Anzahl, Ausbildung sowie Anordnung der Aktuatorkörper und Aufnahmebereiche sind auch sehr komplexe Formveränderungen des Grundkörpers bewirkbar. Das Anbauelement kann beispielsweise als variabler Cupholder, verstellbare Lüftungsschlitzblende, verstellbare Armlehne, verstellbare Blende, verstellbare Kopfstütze oder dergleichen ausgebildet sein. Durch gezieltes Anlegen des Aktuatormittels ist das Anbauelement den Bedürfnissen der Insassen des Kraftfahrzeugs sehr variabel anpassbar.

Es ist bevorzugt, dass der Grundkörper eine Mehrzahl von Aufnahmebereichen aufweist, wobei die Aufnahmebereiche in einem Abschnitt des Grundkörpers zumindest auf zwei unterschiedlichen bzw. entgegengesetzten Seiten des Grundkörpers ausgebildet sind. Je mehr Aufnahmebereiche vorhanden sind, desto vielschichtiger sind die Möglichkeiten der Formveränderung. In Abhängigkeit einer Anordnung sowie Ausbildung der Aufnahmebereiche sind mögliche Richtungen der Formveränderungen definierbar. Das Ausbilden der Aufnahmebereiche auf entgegengesetzten Seiten hat den Vorteil, dass eine Verformbarkeit in entgegengesetzte Richtungen verbessert ist. Dies ist beispielsweise für eine Verwendung als Lüftungsgitter von Vorteil.

Weiter bevorzugt weist der Grundkörper zumindest abschnittsweise einen wellenförmigen Querschnitt auf. Unter einer Wellenform wird erfindungsgemäß eine Sinuskurve, ein Rechteckkurve sowie eine Mischung dieser Kurven verstanden. Dabei ist es bevorzugt, wenn eine Aufnahmekammerform einer Grundkörperform eines Abschnitts des Grundkörpers entspricht bzw. zumindest im Wesentlichen entspricht. Derartige Grundkörper sind mit einfachen Mitteln sowie kostengünstig herstellbar, z.B. durch ein Spritzgussverfahren oder auf einem 3D-Drucker.

Es kann erfindungsgemäß vorgesehen sein, dass der Grundkörper eine Mehrzahl von Aufnahmebereichen aufweist, wobei die Aufnahmebereiche in einem Abschnitt des Grundkörpers im Wesentlichen auf derselben Seite des Grundkörpers ausgebildet sind. Je mehr Aufnahmebereiche vorhanden sind, desto vielschichtiger sind die Möglichkeiten der Formveränderung. In Abhängigkeit einer Anordnung sowie Ausbildung der Aufnahmebereiche sind mögliche Richtungen der Formveränderungen definierbar. Das Ausbilden der Aufnahmebereiche auf derselben Seite hat den Vorteil, dass eine stärkere Verformbarkeit des Anbauelements in eine Richtung erzielbar ist. Dies ist beispielsweise für eine Verwendung als Klappe für ein Fach von Vorteil.

Weiter bevorzugt weist der Grundkörper zumindest abschnittsweise einen kammförmigen Querschnitt auf. Bei einem kammförmigen Querschnitt sind die Aufnahmebereiche vorzugsweise in eine gemeinsame Richtung bzw. im Wesentlichen gemeinsame Richtung geöffnet. Derartige Grundkörper sind mit einfachen Mitteln sowie kostengünstig herstellbar, z.B. durch ein Spritzgussverfahren oder auf einem 3D-Drucker.

In einer vorteilhaften Ausgestaltung der Erfindung kann bei einem Anbauelement vorgesehen sein, dass der mindestens eine Aufnahmebereich im Wesentlichen einen dreieckigen, rechteckigen, trapezförmigen, runden oder ovalen Querschnitt aufweist. Dabei kann erfindungsgemäß vorgesehen sein, dass der Aufnahmebereich eine Hinterschneidung aufweist, um einen Halt des Aktuatorkörpers in dem Aufnahmebereich zu verbessern und/oder ein Maß einer Verformbarkeit des Grundkörpers durch den Aktuatorkörper zu vergrößern, da somit über einen größeren Formveränderungsweg des Aktuatorkörpers die Druckkraft auf die Aufnahmewände übertragbar ist. Derartige Grundkörper sind insbesondere mit einem 3D-Drucker herstellbar.

Gemäß einer bevorzugten Weiterbildung der Erfindung weist bei einem Anbauelement der mindestens eine Aufnahmebereich Aufnahmewände sowie mindestens eine von den Aufnahmewänden verschieden ausgebildete Funktionswand auf. Eine Funktionswand kann beispielsweise eine Auflagefläche des Aktuatorkörpers bereitstellen, um diesen innerhalb des Aufnahmebereichs gezielt zu positionieren und/oder die Verformbarkeit des Grundkörpers zumindest abschnittsweise verändern, insbesondere zu verbessern.

Es ist bevorzugt, dass die Funktionswand einen Hohlraum, insbesondere mit einem rechteckigen, trapezförmigen oder ovalen Querschnitt, aufweist. Der Hohlraum kann erfindungsgemäß auch mit einem Medium, wie z.B. Luft, einem Schaumstoff, einem Elastomer oder dergleichen ausgefüllt bzw. zumindest teilweise ausgefüllt sein. Die Funktionswand kann somit beispielsweise als Doppelwand mit einem Zwischenraum ausgebildet sein. Dabei ist bevorzugt, wenn eine dem Aktuatorkörper zugewandte Wand der Funktionswand eine geringere seitliche Ausbildung als eine dem Aktuatorkörper abgewandte Wand der Funktionswand aufweist. Dies hat den Vorteil, dass eine Formveränderung des Grundkörpers durch die Funktionswand weniger behindert wird.

Vorzugsweise ist als Aktuatormittel elektrischer Strom oder ein Druckfluid, insbesondere Druckluft, verwendbar. Derartige Aktuatormittel sind mit einfachen technischen Mitteln leicht sowie kostengünstig kontrollierbar. Ein Aktuatorkörper, der zum Beaufschlagen mit einem Druckfluid ausgebildet ist, kann zur einachsigen oder zur mehrachsigen Formveränderung bzw. Ausdehnung ausgebildet sein. Bei einer einachsigen Formveränderung kann der Aktuatorkörper beispielsweise einen Druckmantel, Druckkäfig, Druckplatten oder dergleichen auf, die eine Formveränderung nur entlang einer Achse zulassen.

Gemäß einer vorteilhaften Weiterbildung der Erfindung kann bei einem Anbauelement vorgesehen sein, dass der Aktuatorkörper ein geschlossener Körper ist und wenigstens eine Schnittstelle zum Durchfluss von Druckfluid in und/oder aus dem Aktuatorkörper aufweist. Somit ist eine Beaufschlagbarkeit des Aktuatorkörpers mit Druckfluid mit einfachen Mitteln gewährleistet sowie ein unbeabsichtigtes Entweichen des Druckfluids aus dem Aktuatorkörper verhinderbar.

Gemäß einem zweiten Aspekt der Erfindung wird die Aufgabe durch ein System für einen Innenraum eines Kraftfahrzeugs gelöst. Das System weist wenigstens ein erfindungsgemäßes Anbauelement, eine Bereitstellungsvorrichtung zur Bereitstellung des Aktuatormittels, wenigstens ein Leitungselement zum Leiten des Aktuatormittels zwischen der Bereitstellungsvorrichtung und dem wenigstens einem Anbauelement sowie eine Kontrolleinheit zum Steuern und/oder Regeln der Bereitstellungsvorrichtung aufweist.

Die Bereitstellungsvorrichtung zur Bereitstellung des Aktuatormittels kann beispielsweise als Spannungsquelle, Druckluftkompressor oder dergleichen ausgebildet sein. Das Leitungselement kann beispielsweise als Stromkabel oder Druckluftschlauch ausgebildet sein. Mittels der Kontrolleinheit ist die Formveränderung des Anbauelements kontrollierbar. Es kann mindestens ein Sensor vorgesehen sein, der zur Ermittlung von Informationen über einen Verformungszustand des Anbauelements sowie zur Weiterleitung dieser Informationen an die Kontrolleinheit ausgebildet ist.

Das erfindungsgemäße System weist dieselben Vorteile auf, wie bereits voranstehend bezüglich des erfindungsgemäßen Anbauelements beschrieben sind. Mittels des erfindungsgemäßen Systems wird mit einfachen Mitteln sowie kostengünstig eine flexible sowie variable Gestaltung von Anbauelementen im Innenraum des Kraftfahrzeugs bereitgestellt.

Vorzugsweise weist das System wenigstens ein Bedienelement zum Bedienen der Kontrolleinheit auf. Das Bedienelement ist mit der Kontrolleinheit gekoppelt und zur Eingabe von Steuerbefehlen, wie z.B. einer Verstellung eines Lüftungsschlitzes, der Bewegung einer Klappe oder Ähnliches, an die Kontrolleinheit ausgebildet. Zusätzlich oder alternativ kann eine Anzeigeeinheit bzw. Anzeigeschnittstelle vorgesehen sein, um einen Zustand des Anbauelements anzuzeigen.

Gemäß einem dritten Aspekt der Erfindung wird die Aufgabe gelöst durch ein Verfahren zur Herstellung eines Anbauelements zum Anbauen an ein Innenraumbauteil eines Kraftfahrzeugs. Das Anbauelement weist einen Grundkörper aus einem ersten Werkstoff sowie mindestens einen Aktuatorkörper aus einem zweiten Werkstoff auf, wobei der mindestens eine Aktuatorkörper durch Beaufschlagen mit einem Aktuatormittel reversibel verformbar ist. Ferner weist der Grundkörper mindestens einen Aufnahmebereich mit einer Aufnahmebereichsform auf, wobei der mindestens eine Aktuatorkörper in dem mindestens einen Aufnahmebereich angeordnet ist. Durch eine Formveränderung des mindestens einen Aktuatorkörpers ist die Aufnahmebereichsform des mindestens einen Aufnahmebereichs veränderbar. Das Verfahren weist die folgenden Schritte auf:
- Erzeugen eines Grundkörpers aus einem ersten Werkstoff, wobei der Grundkörper mindestens einen Aufnahmebereich mit Aufnahmewänden aufweist,
- Einbringen eines fließfähigen zweiten Werkstoffs in den mindestens einen Aufnahmebereich zur Erzeugung eines Aktuatorkörpers, und
- Verfestigen von Randzonen des zweiten Werkstoffs.

Das Erzeugen des Grundkörpers kann beispielsweise in einem Spritzgießprozess oder mittels eines additiven Verfahrens, wie z.B. einem 3D-Druckverfahren, erfolgen. Der erste Werkstoff ist vorzugsweise Polypropylen (PP), Acrylnitril-Butadien-Styrol (ABS), Polycarbonat (PC), Polyamid (PA) oder dergleichen. Vorzugsweise weist der Grundkörper eine Vielzahl von Aufnahmebereichen auf. Der fließfähige zweite Werksstoff wird anschließend in den mindestens einen Aufnahmebereich, vorzugsweise in mehrere Aufnahmebereiche, des Grundkörpers eingebracht, z.B. eingespritzt oder gedruckt. Es kann vorgesehen sein, dass der zweite Werkstoff in dem Aufnahmebereich aufgeschäumt wird. Randzonen des zweiten Werkstoffs verfestigen bzw. erstarren zuerst, während im Kernbereich eine gewisse Fließfähigkeit zumindest zunächst erhalten bleibt. Unter Verfestigen wird hierbei verstanden, dass ein in diesem Bereich ein höherer Zusammenhalt des zweiten Werkstoffs besteht, der ein Fließen dieser Bereiche verhindert bzw. im Wesentlichen verhindert. Über eine Verformung des Aktuatorkörpers ist der Aufnahmebereich und somit der Grundkörper elastisch verformbar. Eine derartige Verformung des Aktuatorkörpers ist beispielsweise durch den Einsatz eines elektroaktiven Polymers als zweiten Werkstoff. Durch Anlegen einer Spannung an den Aktuatorkörper ist somit eine Verformung erzielbar.

Das erfindungsgemäße Verfahren weist dieselben Vorteile auf, wie bereits voranstehend bezüglich des erfindungsgemäßen Anbauelements bzw. des erfindungsgemäßen Systems beschrieben sind. Mittels des erfindungsgemäßen Verfahrens wird mit einfachen Mitteln eine kostengünstige Herstellung eines erfindungsgemäßen Anbauelements ermöglicht, das zur Ausübung einer Vielzahl unterschiedlicher technischer Funktionen ausgebildet ist. Je nach Anzahl, Ausbildung sowie Anordnung der Aktuatorkörper und Aufnahmebereiche sind auch sehr komplexe Formveränderungen des Grundkörpers bewirkbar. Das Anbauelement kann beispielsweise als variabler Cupholder, verstellbare Lüftungsschlitzblende, verstellbare Armlehne, verstellbare Blende, verstellbare Kopfstütze oder dergleichen ausgebildet sein.

Es kann erfindungsgemäß vorgesehen sein, dass zumindest eines Teils des fließfähigen zweiten Werkstoffs (W2) aus dem Aufnahmebereich (4) derart ausgetrieben wird, dass mindestens eine von den verfestigten Randzonen (15) umgebene, durchgängige Kavität (16) gebildet wird, wobei das Austreiben durch ein Druckfluid, insbesondere Druckluft, und/oder mittels eines gelösten Treibmittels erfolgt. Beim Austreiben wird zumindest ein Teil des fließfertigen zweiten Werkstoffs aus dem Kernbereich aus dem Aufnahmebereich ausgetrieben und somit entfernt. Hierdurch wird eine durchgängige Kavität in dem zweiten Werkstoff gebildet. Durch Beaufschlagen der Kavität mit einem Aktuatormittel, wie z.B. einem Druckfluid oder dergleichen, ist ein Druck innerhalb der Kavität erzeugbar mittels dessen der Aktuatorkörper elastisch verformbar ist. Über diese Verformung des Aktuatorkörpers ist der Aufnahmebereich und somit der Grundkörper elastisch verformbar. Dies hat den Vorteil, dass mit einfachen Mitteln eine Steuerbarkeit der Aktuatorkörper erzielbar ist. Das gelöste Treibmittel ist zum Aufschäumen einer plastischen Seele bei Druckentlastung sowie bei noch weiterer Volumenfreigabe durch aufbrechen des Schaums zum Erzeugen des durchgängigen Kanals ausgebildet. Dies hat den Vorteil, dass kein weiteres Medium und kein Austreiben des Materials erforderlich ist. Alternativ oder Zusätzlich kann der Kanal auch bei partieller Haftung zwischen dem ersten Werkstoff und dem zweiten Werkstoff durch Beaufschlagung dieser nichthaftenden Grenzflächen mit einem Druckfluid. Derartige Grenzflächen sind beispielsweise durch Maskieren und Vorbehandeln, wie z.B. Beflammen, Plasma oder dergleichen, oder durch den Auftrag eines Trennmittels zwischen dem Grundkörper und dem Aktuatorkörper.

Ein erfindungsgemäßes Anbauelement, System sowie Verfahren zur Herstellung des Anbauelements werden nachfolgend anhand von Zeichnungen näher erläutert. Es zeigen jeweils schematisch:
- Figur 1a: in einer Seitenansicht eine erste Ausführungsform eines erfindungsgemäßen Anbauelements,
- Figur 1b: in einer Seitenansicht eine zweite Ausführungsform eines erfindungsgemäßen Anbauelements,
- Figur 1c: in einer Seitenansicht eine dritte Ausführungsform eines erfindungsgemäßen Anbauelements,
- Figur 1d: in einer Seitenansicht eine vierte Ausführungsform eines erfindungsgemäßen Anbauelements,
- Figur 2a: in einer Seitenansicht einen ersten Zustand bei der Durchführung des erfindungsgemäßen Verfahrens,
- Figur 2b: in einer Seitenansicht einen zweiten Zustand bei der Durchführung des erfindungsgemäßen Verfahrens,
- Figur 2c: in einer Seitenansicht einen dritten Zustand bei der Durchführung des erfindungsgemäßen Verfahrens,
- Figur 2d: in einer Seitenansicht einen vierten Zustand bei der Durchführung des erfindungsgemäßen Verfahrens,
- Figur 2e: in einer Seitenansicht einen fünften Zustand bei der Durchführung des erfindungsgemäßen Verfahrens,
- Figur 3: in einer Draufsicht eine spezielle Ausgestaltung des Anbauelements,
- Figur 4: in einer Seitenansicht ein verformtes Anbauelement, und
- Figur 5: ein erfindungsgemäßes System.

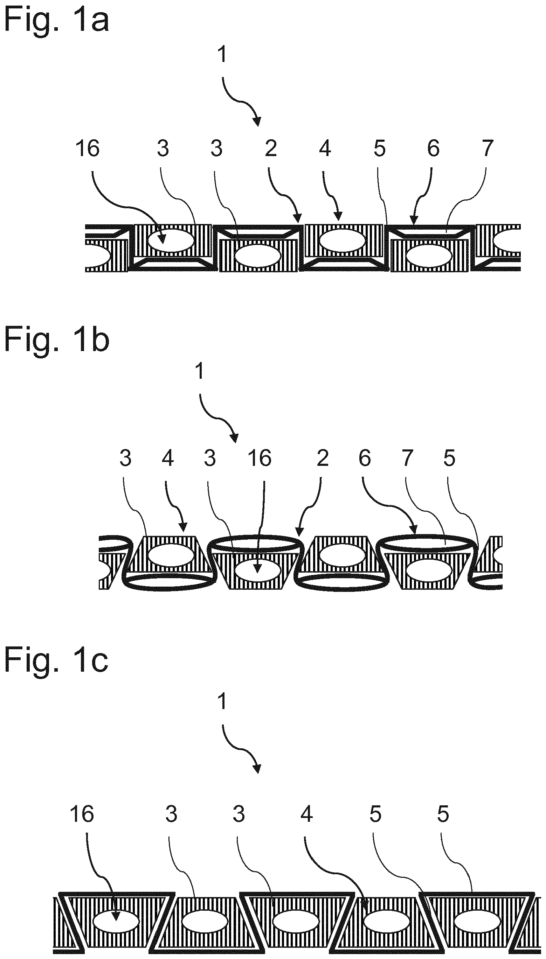

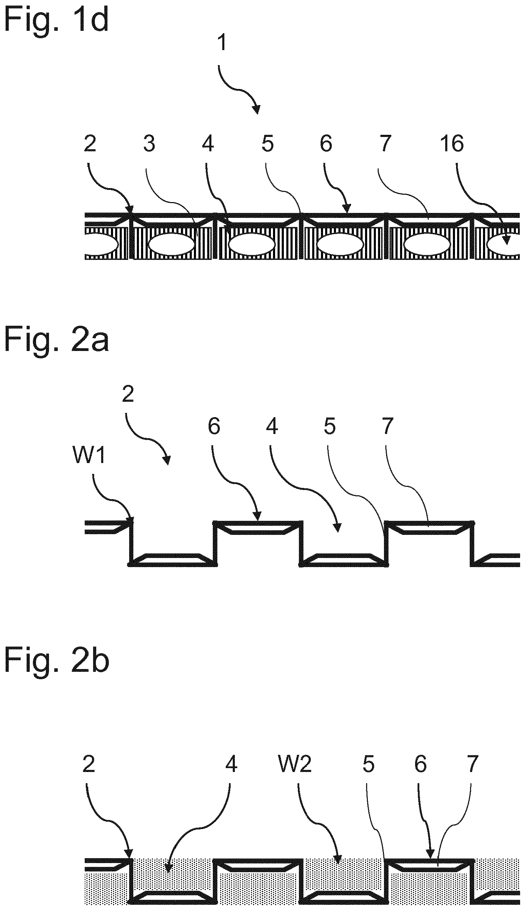

Elemente mit gleicher Funktion und Wirkungsweise sind in den Fig. 1 bis 5 jeweils mit denselben Bezugszeichen versehen. Von den Anbauelementen 1 ist jeweils nur ein Ausschnitt abgebildet, wobei die Anbauelemente 1 als Endlosbauteil, das z.B. auf eine Rolle aufspulbar ist, ausgebildet sein können.

In Fig. 1a ist schematisch eine erste Ausführungsform eines erfindungsgemäßen Anbauelements 1 in einer Seitenansicht abgebildet. Das Anbauelement 1 weist einen Grundkörper 2 mit einem Querschnitt auf, der im Wesentlichen einem Rechteckprofil entspricht. Der Grundkörper 2 weist Aufnahmewände 5 und Funktionswände 6 auf, durch die Aufnahmebereiche 4 mit einem im Wesentlichen rechteckigen Querschnitt definiert sind, wobei die Aufnahmewände 5 die Aufnahmebereiche 4 seitlich begrenzen und die Funktionswände 6 jeweils eine Basiswand der Aufnahmebereiche 4 bereitstellen, die jeweils zwischen zwei Aufnahmewänden 5 angeordnet sind. Die Funktionswände 6 sind in diesem Beispiel als Doppelwand mit einem dazwischen ausgebildeten Hohlraum 7 ausgebildet, wobei eine zum Inneren des Aufnahmebereichs 4 angeordnete Wand kürzer als eine nach außen angeordnete Wand ist, so dass die Funktionswände 6 einen Trapezförmigen Querschnitt aufweisen. Hierdurch wird eine Verformbarkeit des Anbauelements 1 verbessert. Alternativ kann der Hohlraum 7 einen Kern, insbesondere einen Schaumkern oder eine oder mehrere Sandwichlagen aus unterschiedlichen Werkstoffen aufweisen.

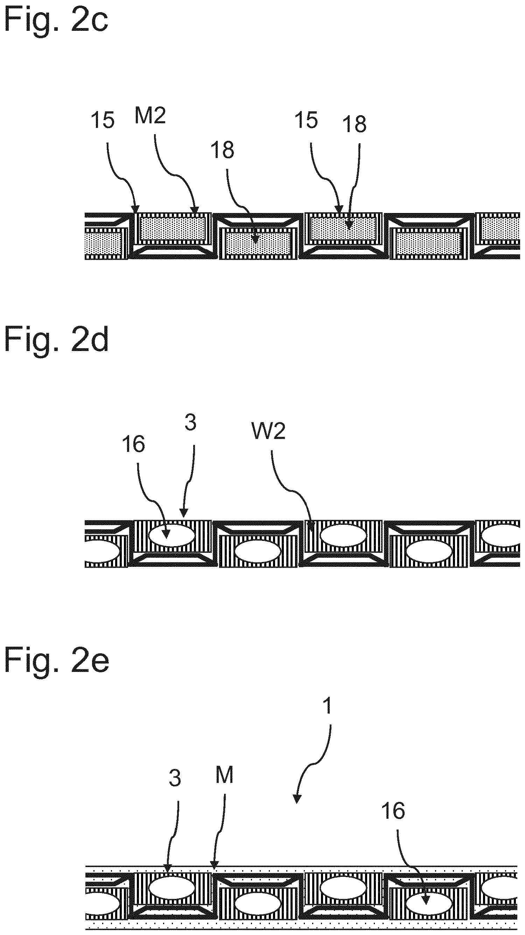

Die Aufnahmebereiche 4 sind gleichmäßig verteilt nebeneinander angeordnet, wobei benachbarte Aufnahmebereiche 4 in entgegengesetzte Richtungen geöffnet sind. In jedem der Aufnahmebereiche 4 ist ein Aktuatorkörper 3 angeordnet. Durch die Funktionswand 6 sind die Aufnahmebereiche 4 auf einer Seite verkleinert, so dass die benachbarten Aktuatorkörper 3 relativ zueinander einen Versatz aufweisen. Hierdurch wird eine Verformbarkeit des Anbauelements 1 verbessert. Der Aktuatorkörper 3 weist eine zentrale Kavität 16 auf, die mit einem Aktuatormittel, wie z.B. Druckluft, einer Druckflüssigkeit oder dergleichen, beaufschlagbar ist. Durch dieses Beaufschlagen ist der Aktuatorkörper 3 ausdehnbar und diese Ausdehnung auf den Grundkörper 2 übertragbar, so dass das Anbauelement 1 somit gezielt verformbar ist. Eine derartige Ausbildung ist besonders für Funktionsbauteile geeignet, die in zwei entgegengesetzte Richtungen eine gute Verformbarkeit aufweisen sollen, wie z.B. Lüftungsschlitzgitter. Erfindungsgemäß ist es vorgesehen, dass die erste Ausführungsform ein Matrixmaterial M (vgl. Fig. 2e) aufweist, in das der Grundkörper mit den Aktuatorkörpern eingebettet ist. Das Matrixmaterial kann beispielsweise zur Erzielung eines optischen und/oder haptischen Effekts ausgebildet sein.

In Fig. 1b ist schematisch eine zweite Ausführungsform eines erfindungsgemäßen Anbauelements 1 in einer Seitenansicht abgebildet. Die zweite Ausführungsform unterscheidet sich von der ersten Ausführungsform insbesondere in einer Ausbildung des Grundkörpers 2 sowie der Aktuatorkörper 3. Der Grundkörper 2 weist im Wesentlichen einen wellenförmigen und die Aktuatorkörper 3 einen trapezförmigen Querschnitt auf, wobei die Aufnahmebereiche 4 Hinterschneidungen aufweisen in welche die Aktuatorkörper 3 hintergreifen und somit besser am Grundkörper 2 gehalten sind. Ein Querschnitt der Hohlräume 7 der Funktionswände 6 ist in diesem Beispiel oval ausgebildet. Erfindungsgemäß ist es vorgesehen, dass die zweite Ausführungsform ein Matrixmaterial M (vgl. Fig. 2e) aufweist, in das der Grundkörper mit den Aktuatorkörpern eingebettet ist.

In Fig. 1c ist schematisch eine dritte Ausführungsform eines erfindungsgemäßen Anbauelements 1 in einer Seitenansicht abgebildet. Die dritte Ausführungsform unterscheidet sich von der ersten Ausführungsform insbesondere in einer Ausbildung des Grundkörpers 2 sowie der Aktuatorkörper 3. Der Grundkörper 2 weist im Wesentlichen einen sägezahnförmigen Querschnitt auf, wobei die Aufnahmebereiche 4 sowie die Aktuatorkörper 3 einen trapezförmigen Querschnitt aufweisen. Die Aufnahmebereiche 4 weisen Hinterschneidungen auf, in die die Aktuatorkörper 3 hintergreifen und somit besser am Grundkörper 2 gehalten sind. Das Anbauelement 1 gemäß der dritten Ausführungsform weist anstatt einer Funktionswand 6 eine herkömmliche Aufnahmewand 5 auf. Erfindungsgemäß ist es vorgesehen dass die dritte Ausführungsform ein Matrixmaterial M (vgl. Fig. 2e) aufweist, in das der Grundkörper mit den Aktuatorkörpern eingebettet ist.

In Fig. 1d ist schematisch eine vierte Ausführungsform eines erfindungsgemäßen Anbauelements 1 in einer Seitenansicht abgebildet. Die vierte Ausführungsformen unterscheidet sich von der ersten Ausführungsform insbesondere in einer Ausbildung des Grundkörpers 2 und somit einer Anordnung der Aufnahmebereiche 3 und damit auch einer Anordnung der Aktuatorkörper 3. Der Grundkörper 2 ist kammförmig ausgebildet, wobei die Aufnahmebereiche 4 gleichmäßig verteilt nebeneinander aufgereiht sowie in dieselbe Richtung geöffnet angeordnet sind. Eine derartige Ausbildung ist besonders für Funktionsbauteile geeignet, die in eine Richtung eine besonders große Verformbarkeit aufweisen sollen, wie z.B. Klappen von Ablagefächern, Armlehnen, Konsolen bzw. Konsolenblenden oder dergleichen. Erfindungsgemäß ist es vorgesehen, dass die vierte Ausführungsform ein Matrixmaterial M (vgl. Fig. 2e) aufweist, in das der Grundkörper mit den Aktuatorkörpern eingebettet ist.

In Fig. 2a ist ein erster Zustand bei der Durchführung des erfindungsgemäßen Verfahrens in einer Seitenansicht schematisch dargestellt. Es ist ein Grundkörper 2 aus einem ersten Werkstoff W1 abgebildet. Der Grundkörper 2 weist einen Querschnitt mit einem Rechteckprofil auf. Ferner weist der Grundkörper 2 Aufnahmewände 5 und Funktionswände 6 auf, wobei durch jeweils zwei Aufnahmewände 5 und eine Funktionswand 6 ein Aufnahmebereich 4 in drei Richtungen begrenzt ist. Die Aufnahmebereiche 4 sind in einer von der Funktionswand 6 abweisenden Richtung offen. Die Funktionswände 6 weisen einen trapezförmigen Querschnitt auf, wobei eine kurze Seite dem Aufnahmebereich 4 zugewandt und eine lange Seite vom Aufnahmebereich 4 abgewandt ist. Ein solcher Grundkörper 2 ist beispielsweise in einem Spritzgießprozess oder 3D-Druckprozess hergestellt.

In Fig. 2b ist ein zweiter Zustand bei der Durchführung des erfindungsgemäßen Verfahrens in einer Seitenansicht schematisch dargestellt. In die Aufnahmebereiche 4 des Grundkörpers 2 ist ein fließfähiger zweiter Werkstoff W2 eingebracht.

In Fig. 2c ist ein dritter Zustand bei der Durchführung des erfindungsgemäßen Verfahrens in einer Seitenansicht schematisch dargestellt. Randzonen 215 des zweiten Werkstoffs W2 sind verfestigt bzw. zumindest im Wesentlichen verfestigt und sind somit nicht mehr fließfähig bzw. zumindest deutlich schlechter fließfähig als der zweite Werkstoff W2 in einer zentralen Zone 18. Es kann vorgesehen sein, dass durch die Verfestigung eine Anbindung, insbesondere eine adhäsive Anbindung, zwischen dem zweiten Werkstoff W2 und dem Grundkörper 2 erzielt wird. Dabei kann eine Haftungsmodifizierung insbesondere des zweiten Werkstoffs W2 vorgesehen sein.

In Fig. 2d ist ein vierter Zustand bei der Durchführung des erfindungsgemäßen Verfahrens in einer Seitenansicht schematisch dargestellt. Zumindest Teile des zweiten Werkstoffs W2 aus der zentralen Zone 18 (vgl. Fig. 2c) sind entfernt, wobei hierdurch eine durchgängige Kavität 16 entstanden ist, die vorzugsweise im Wesentlichen in einer Mitte des Querschnitts des Aktuatorkörpers 3 ausgebildet ist, um das Risiko einer Beschädigung des Aktuatorkörpers 3 aufgrund hoher Innendrücke innerhalb der Kavität 16 zu reduzieren.

In Fig. 2e ist ein fünfter Zustand bei der Durchführung des erfindungsgemäßen Verfahrens in einer Seitenansicht schematisch dargestellt. In dem fünften Zustand ist das Anbauelement 1 fertiggestellt. Der die Aktuatorkörper 3 beherbergende Grundkörper 2 ist in ein Matrixmaterial M eingebettet, das diesen sowie die Aktuatorkörper 3 vollständig umgibt. Zusätzlich zu einem Matrixmaterial M können auch Schichten bzw. Folien auf einer oder zwei Seiten des Grundkörpers 2 angebracht werden und diesen somit jeweils zu einer Seite bedecken bzw. versiegeln.

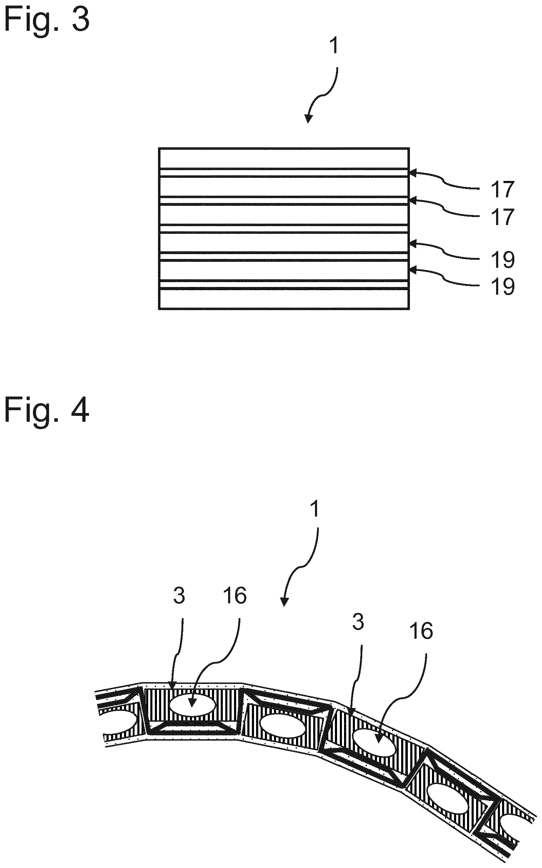

In Fig. 3 ist eine spezielle Ausgestaltung des erfindungsgemäßen Anbauelements 1 in einer Draufsicht schematisch dargestellt. Das Anbauelement 1 ist als Lüftungsgitter ausgebildet. Zwischen einzelnen Lamellen 19 sind Schlitze 17 ausgebildet. Durch beaufschlagen des Anbauelements 1 bzw. bestimmter Aktuatorkörper 3 des Anbauelements 1 sind die Lamellen 19 verformbar bzw. bewegbar und somit die Schlitze 17 ebenfalls veränderbar. Ein auf Lüftungsgitter strömender Luftstrom ist somit beispielsweise durch das Lüftungsgitter hindurchleitbar, umlenkbar oder durch Schließen der Schlitze 17 aufhaltbar.

Fig. 4 zeigt ein verformtes erfindungsgemäßes Anbauelement 1. Die Kavitäten 16 bestimmter Aktuatorkörper 3 sind gezielt mit einem Aktuatormittel, wie z.B. Druckluft, beaufschlagt und die Aktuatorkörper 3 hierdurch seitlich ausgedehnt. In diesem Beispiel ist das Anbauelement 1 hierdurch an zwei Stellen leicht gebogen. Es ist selbstverständlich auch möglich, auf diese Weise das Anbauelement 1 an diesen oder anderen Stellen in eine entgegengesetzte Richtung zu biegen. Somit sind sehr komplexe Verformungen des Anbauelements 1 erzielbar.

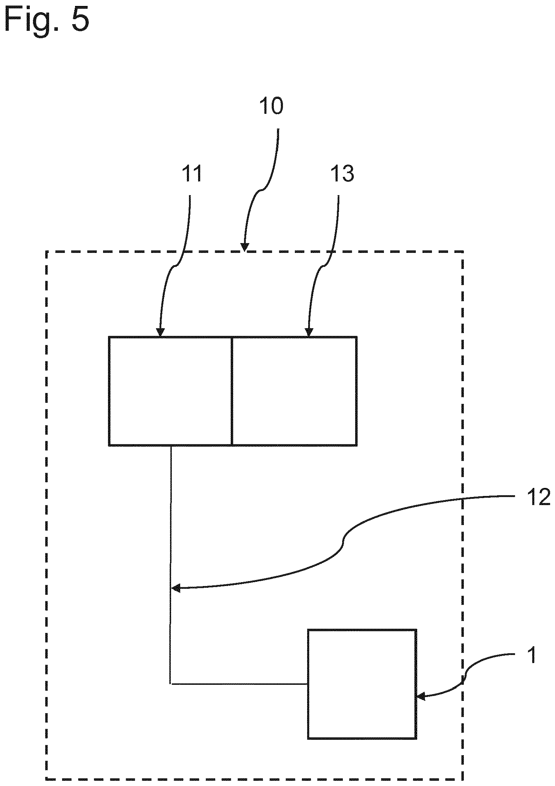

In Fig. 5 ist ein erfindungsgemäßes System 10 schematisch dargestellt. Das System 10 für einen Innenraum eines Kraftfahrzeugs weist ein erfindungsgemäßes Anbauelement 1 auf, das über ein Leitungselement 12 des Systems 10, wie z.B. eine Druckleitung, mit einer Bereitstellungsvorrichtung 11 des Systems 10 zur Bereitstellung des Aktuatormittels kommunizierend, insbesondere fluidkommunizierend, gekoppelt ist. Über eine Kontrolleinheit 13 des Systems 10 ist die Bereitstellungsvorrichtung 11 und somit die Bereitstellung des Aktuatormittels kontrollierbar. Ein Kontrollieren kann erfindungsgemäß ein Steuern und/oder Regeln umfassen. Zum Regeln kann das System 10 nicht gezeigte Sensoren bzw. Detektoren aufweisen, die beispielsweise zum Messen der Drücke in den Aufnahmebereichen 4 und/oder den Kavitäten 16 bzw. zum Messen von Dehnungen und/oder zur Wahrnehmung der Position im Raum des Anbauelements 1 ausgebildet sind.

### Bezugszeichenliste

- 1: Anbauelement
- 2: Grundkörper
- 3: Aktuatorkörper
- 4: Aufnahmebereich
- 5: Aufnahmewand
- 6: Funktionswand
- 7: Hohlraum
- 10: System
- 11: Bereitstellungsvorrichtung
- 12: Leitungselement
- 13: Kontrolleinheit
- 14: Bedienelement
- 15: Randzone
- 16: Kavität
- 17: Schlitz
- 18: zentrale Zone
- 19: Lamelle

- M: Matrixmaterial
- W1: erster Werkstoff
- W2: zweiter Werkstoff

## Patentansprüche

1. Anbauelement (1) zum Anbauen an ein Innenraumbauteil eines Kraftfahrzeugs, aufweisend einen Grundkörper (2) aus einem ersten Werkstoff (W1) sowie mindestens einen Aktuatorkörper (3) aus einem zweiten Werkstoff (W2), wobei der mindestens eine Aktuatorkörper (3) durch Beaufschlagen mit einem Aktuatormittel reversibel verformbar ist,
wobei der Grundkörper (2) mindestens einen Aufnahmebereich (4) mit einer Aufnahmebereichsform aufweist, wobei der mindestens eine Aktuatorkörper (3) in dem mindestens einen Aufnahmebereich (4) angeordnet ist, und dass durch eine Formveränderung des mindestens einen Aktuatorkörpers (3) die Aufnahmebereichsform des mindestens einen Aufnahmebereichs (4) veränderbar ist,
**dadurch gekennzeichnet, dass**
der Grundkörper (2) und der Aktuatorkörper (3) in ein Matrixmaterial (M) eingebettet sind.

2. Anbauelement (1) nach Anspruch 1,
**dadurch gekennzeichnet,**
**dass** der Grundkörper (2) eine Mehrzahl von Aufnahmebereichen (4) aufweist, wobei die Aufnahmebereiche (4) in einem Abschnitt des Grundkörpers (2) zumindest auf zwei unterschiedlichen Seiten des Grundkörpers (2) ausgebildet sind.

3. Anbauelement (1) nach Anspruch 1 oder 2,
**dadurch gekennzeichnet,**
**dass** der Grundkörper (2) zumindest abschnittsweise einen wellenförmigen Querschnitt aufweist.

4. Anbauelement (1) nach Anspruch 1 oder 3,
**dadurch gekennzeichnet,**
**dass** der Grundkörper (2) eine Mehrzahl von Aufnahmebereichen (4) aufweist, wobei die Aufnahmebereiche (4) in einem Abschnitt des Grundkörpers (2) im Wesentlichen auf derselben Seite des Grundkörpers (2) ausgebildet sind.

5. Anbauelement (1) nach Anspruch 4,
**dadurch gekennzeichnet,**
**dass** der Grundkörper (2) zumindest abschnittsweise einen kammförmigen Querschnitt aufweist.

6. Anbauelement (1) nach wenigstens einem der vorangegangenen Ansprüche,
**dadurch gekennzeichnet,**
**dass** der mindestens eine Aufnahmebereich (4) im Wesentlichen einen dreieckigen, rechteckigen, trapezförmigen, runden oder ovalen Querschnitt aufweist.

7. Anbauelement (1) nach wenigstens einem der vorangegangenen Ansprüche,
**dadurch gekennzeichnet,**
**dass** der mindestens eine Aufnahmebereich (4) Aufnahmewände (5) sowie mindestens eine von den Aufnahmewänden (5) verschieden ausgebildete Funktionswand (6) aufweist.

8. Anbauelement (1) nach Anspruch 7,
**dadurch gekennzeichnet,**
**dass** die Funktionswand (6) einen Hohlraum (7), insbesondere mit einem rechteckigen, trapezförmigen oder ovalen Querschnitt, aufweist.

9. Anbauelement (1) nach wenigstens einem der vorangegangenen Ansprüche,
**dadurch gekennzeichnet,**
**dass** als Aktuatormittel elektrischer Strom oder ein Druckfluid, insbesondere Druckluft, verwendbar ist.

10. Anbauelement (1) nach Anspruch 9,
**dadurch gekennzeichnet,**
**dass** der Aktuatorkörper (3) ein geschlossener Körper ist und wenigstens eine Schnittstelle zum Durchfluss von Druckfluid in und/oder aus dem Aktuatorkörper (3) aufweist.

11. Anbauelement (1) nach wenigstens einem der vorangegangenen Ansprüche,
**dadurch gekennzeichnet,**
**dass** der erste Werkstoff (W1) eine höhere Steifigkeit als der zweite Werkstoff (W2) aufweist.

12. System (10) für einen Innenraum eines Kraftfahrzeugs,
**dadurch gekennzeichnet,**
**dass** das System (10) wenigstens ein Anbauelement (1) nach wenigstens einem der vorangegangenen Ansprüche, eine Bereitstellungsvorrichtung (11) zur Bereitstellung des Aktuatormittels, wenigstens ein Leitungselement (12) zum Leiten des Aktuatormittels zwischen der Bereitstellungsvorrichtung (11) und dem wenigstens einem Anbauelement (1) sowie eine Kontrolleinheit (13) zum Steuern und/oder Regeln der Bereitstellungsvorrichtung (11) aufweist.

13. System (10) nach Anspruch 12,
**dadurch gekennzeichnet,**
**dass** das System (10) wenigstens ein Bedienelement (14) zum Bedienen der Kontrolleinheit (13) aufweist.

14. Herstellungsverfahren eines Anbauelements (1) nach wenigstens einem der Ansprüche 1 bis 11, aufweisend die Schritte:
- Erzeugen eines Grundkörpers (2) aus einem ersten Werkstoff (W1), wobei der Grundkörper (2) mindestens einen Aufnahmebereich (4) mit Aufnahmewänden (5) aufweist,
- Einbringen eines fließfähigen zweiten Werkstoffs (W2) in den mindestens einen Aufnahmebereich (4) zur Erzeugung eines Aktuatorkörpers (3), und
- Verfestigen von Randzonen (15) des zweiten Werkstoffs (W2).

15. Verfahren nach Anspruch 14,
**dadurch gekennzeichnet,**
**dass** zumindest eines Teils des fließfähigen zweiten Werkstoffs (W2) aus dem Aufnahmebereich (4) derart ausgetrieben wird, dass mindestens eine von den verfestigten Randzonen (15) umgebene, durchgängige Kavität (16) gebildet wird, wobei das Austreiben durch ein Druckfluid, insbesondere Druckluft, und/oder mittels eines gelösten Treibmittels erfolgt.

## Claims

1. Add-on element (1) for adding onto an interior component of a motor vehicle, having a basic body (2) made of a first material (W1) and at least one actuator body (3) made of a second material (W2), the at least one actuator body (3) being reversibly deformable by applying an actuator means, wherein the basic body (2) has at least one receiving region (4) with a receiving region shape, wherein the at least one actuator body (3) is arranged in the at least one receiving region (4), and in that as a result of a shape change of the at least one actuator body (3), the receiving region shape of the at least one receiving region (4) can be changed,
**characterized in that**
the basic body (2) and the actuator body (3) are embedded in a matrix material (M).

2. Add-on element (1) according to Claim 1,
**characterized in that**
the basic body (2) has a plurality of receiving regions (4), wherein the receiving regions (4) in one section of the basic body (2) are formed at least on two different sides of the basic body (2).

3. Add-on element (1) according to Claim 1 or 2,
**characterized in that**
the basic body (2) has a wave-like cross section, at least in some areas.

4. Add-on element (1) according to Claim 1 or 3,
**characterized in that**
the basic body (2) has a plurality of receiving regions (4), wherein the receiving regions (4) in one section of the basic body (2) are formed substantially on the same side of the basic body (2).

5. Add-on element (1) according to Claim 4,
**characterized in that**
the basic body (2) has a comb-like cross section, at least in some areas.

6. Add-on element (1) according to at least one of the preceding claims,
**characterized in that**
the at least one receiving region (4) has a substantially triangular, rectangular, trapezoidal, round or oval cross section.

7. Add-on element (1) according to at least one of the preceding claims,
**characterized in that**
the at least one receiving region (4) has receiving walls (5) and at least one functional wall (6) formed differently from the receiving walls (5).

8. Add-on element (1) according to Claim 7,
**characterized in that**
the functional wall (6) has a hollow space (7), in particular with a rectangular, trapezoidal or oval cross section.

9. Add-on element (1) according to at least one of the preceding claims,
**characterized in that**
electric current or a pressurized fluid, in particular compressed air, can be used as actuator means.

10. Add-on element (1) according to Claim 9,
**characterized in that**
the actuator body (3) is a closed body and has at least one interface for the flow of pressurized fluid into and/or out of the actuator body (3).

11. Add-on element (1) according to at least one of the preceding claims,
**characterized in that**
the first material (W1) has a higher stiffness than the second material (W2).

12. System (10) for an interior of a motor vehicle,
**characterized in that**
the system (10) at least one add-on element (1) according to at least one of the preceding claims, a providing device (11) for providing the actuator means, at least one line element (12) for guiding the actuator means between the providing device (11) and the at least one add-on element (1) and a control unit (13) for the open-loop and/or closed-loop control of the providing device (11).

13. System (10) according to Claim 12,
**characterized in that**
the system (10) has at least one operating element (14) for operating the control unit (13).

14. Production method for an add-on element (1) according to at least one of Claims 1 to 11, having the steps:
- producing a basic body (2) from a first material (W1), wherein the basic body (2) has at least one receiving region (4) with receiving walls (5),
- introducing a free-flowing second material (W2) into the at least one receiving region (4) to produce an actuator body (3), and
- solidifying edge zones (15) of the second material (W2) .

15. Method according to Claim 14,
**characterized in that**
at least part of the free-flowing second material (W2) is driven out of the receiving region (4) in such a way that at least one continuous cavity (16) surrounded by the solidified edge zones (15) is formed, the expulsion being carried out by a pressurized fluid, in particular compressed air, and/or by means of a dissolved propellant.

## Revendications

1. Élément à monter (1) destiné à être monté sur un composant d'habitacle d'un véhicule automobile, comprenant un corps de base (2) en un premier matériau (W1) ainsi qu'au moins un corps d'actionneur (3) en un deuxième matériau (W2), l'au moins un corps d'actionneur (3) étant déformable de manière réversible en lui appliquant un moyen actionneur,
le corps de base (2) possédant au moins une zone d'accueil (4) ayant une forme de zone d'accueil, l'au moins un corps d'actionneur (3) étant disposé dans l'au moins une zone d'accueil (4), et la forme de zone d'accueil de l'au moins une zone d'accueil (4) pouvant être modifiée par un changement de forme de l'au moins un corps d'actionneur (3),
**caractérisé en ce que**
le corps de base (2) et le corps d'actionneur (3) sont enrobés dans un matériau de matrice (M).

2. Élément à monter (1) selon la revendication 1, **caractérisé en ce que** le corps de base (2) possède une pluralité de zones d'accueil (4), les zones d'accueil (4) dans une portion du corps de base (2) étant formées sur au moins deux côtés différents du corps de base (2).

3. Élément à monter (1) selon la revendication 1 ou 2, **caractérisé en ce que** le corps de base (2) possède au moins dans certaines portions une section transversale de forme ondulée.

4. Élément à monter (1) selon la revendication 1 ou 3, **caractérisé en ce que** le corps de base (2) possède une pluralité de zones d'accueil (4), les zones d'accueil (4) dans une portion du corps de base (2) étant formées sensiblement sur le même côté du corps de base (2).

5. Élément à monter (1) selon la revendication 4, **caractérisé en ce que** le corps de base (2) possède au moins dans certaines portions une section transversale en forme de peigne.

6. Élément à monter (1) selon au moins l'une des revendications précédentes, **caractérisé en ce que** l'au moins une zone d'accueil (4) possède une section transversale sensiblement triangulaire, parallélépipédique, trapézoïdale, ronde ou ovale.

7. Élément à monter (1) selon au moins l'une des revendications précédentes, **caractérisé en ce que** l'au moins une zone d'accueil (4) possède des parois d'accueil (5) ainsi qu'au moins une paroi fonctionnelle (6) de configuration différente de celle des parois d'accueil (5) .

8. Élément à monter (1) selon la revendication 7, **caractérisé en ce que** la paroi fonctionnelle (6) possède un espace creux (7), ayant notamment une forme parallélépipédique, trapézoïdale ou ovale.

9. Élément à monter (1) selon l'une des revendications précédentes, **caractérisé en ce que** du courant électrique ou un fluide sous pression, notamment de l'air comprimé, peut être utilisé comme moyen actionneur.

10. Élément à monter (1) selon la revendication 9, **caractérisé en ce que** le corps d'actionneur (3) possède un corps fermé et au moins une interface pour le passage du flux de fluide sous pression dans et/ou hors du corps d'actionneur (3).

11. Élément à monter (1) selon l'une des revendications précédentes, **caractérisé en ce que** le premier matériau (W1) présente une rigidité supérieure à celle du deuxième matériau (W2).

12. Système (10) pour un habitacle d'un véhicule automobile, **caractérisé en ce que** le système (10) au moins un élément à monter (1) selon l'une des revendications précédentes, un dispositif de mise à disposition (11) destiné à mettre à disposition le moyen actionneur, au moins un élément de conduite (12) destiné à conduire le moyen actionneur entre le dispositif de mise à disposition (11) et l'au moins un élément à monter (1) ainsi qu'une unité de contrôle (13) destinée à commander et/ou à réguler le dispositif de mise à disposition (11).

13. Système (10) selon la revendication 12, **caractérisé en ce que** le système (10) possède au moins un élément de service (14) destiné à servir l'unité de contrôle (13).

14. Procédé de fabrication d'un élément à monter (1) selon l'une des revendications 1 à 11, comprenant les étapes suivantes
- production d'un corps de base (2) en un premier matériau (W1), le corps de base (2) possédant au moins une zone d'accueil (4) ayant des parois de zone d'accueil (5),
- introduction d'un deuxième matériau (W2) coulant dans l'au moins une zone d'accueil (4) en vue de produire un corps d'actionneur (3) et
- durcissement de zones de bord (15) du deuxième matériau (W2).

15. Procédé selon la revendication 14, **caractérisé en ce qu'**au moins une partie du deuxième matériau (W2) coulant est expulsée hors de la zone d'accueil (4) de manière à former au moins une cavité (16) continue entourée par les zones de bord (15) durcies, l'expulsion s'effectuant par un fluide sous pression, notamment de l'air comprimé, et/ou au moyen d'un agent propulseur libéré.
